(19) **Europäisches Patentamt / European Patent Office / Office européen des brevets**

(11) **EP 4 175 160 B1**

(12) **FASCICULE DE BREVET EUROPEEN**

(45) Date de publication et mention
de la délivrance du brevet:
**27.11.2024 Bulletin 2024/48**

(21) Numéro de dépôt: **22203141.1**

(22) Date de dépôt: **21.10.2022**

(51) Classification Internationale des Brevets (IPC):
*H02P 3/02* (2006.01)    *H02J 3/00* (2006.01)
*H02J 3/32* (2006.01)    *H02J 7/00* (2006.01)
*H02J 3/38* (2006.01)    *H02J 7/32* (2006.01)
*H02P 9/02* (2006.01)

(52) Classification Coopérative des Brevets (CPC):
**H02P 9/02; H02J 3/003; H02J 3/32; H02J 3/381;
H02J 7/00712; H02J 7/32;** H02J 2300/10;
H02J 2300/24

(54) **OPTIMISATION DE L'UTILISATION D'UN GROUPE ÉLECTROGÈNE**

OPTIMIERUNG DER VERWENDUNG EINER ELEKTROGENGRUPPE

OPTIMIZATION OF THE USE OF A POWER GENERATOR

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **28.10.2021 FR 2111453**

(43) Date de publication de la demande:
**03.05.2023 Bulletin 2023/18**

(73) Titulaire: **Sagemcom Energy & Telecom SAS
92270 Bois-Colombes (FR)**

(72) Inventeurs:
• **BILLET, Claire
92500 Rueil Malmaison (FR)**
• **HJIEJ, Amine
92500 Rueil Malmaison (FR)**

(74) Mandataire: **Cabinet Boettcher
5, rue de Vienne
75008 Paris (FR)**

(56) Documents cités:
**EP-A1- 3 876 378    US-A1- 2013 099 720**

• **LOUIE HENRY ET AL: "Rural Off-Grid Electricity
Service in Sub-Saharan Africa [Technology
Leaders]", IEEE ELECTRIFICATION MAGAZINE,
IEEE, USA, vol. 3, no. 1, 27 February 2015
(2015-02-27), pages 7 - 15, XP011574008, ISSN:
2325-5897, [retrieved on 20150226], DOI:
10.1109/MELE.2014.2380111**
• **BALA B ET AL: "Optimal design of a PV-diesel
hybrid system for electrification of an isolated
island-Sandwip in Bangladesh using genetic
algorithm", ENERGY SUSTAINABLE
DEVELOPMENT, INTERNATIONAL ENERGY
INITIATIVE, BANGALORE, IN, vol. 13, no. 3, 1
September 2009 (2009-09-01), pages 137 - 142,
XP026653268, ISSN: 0973-0826, [retrieved on
20090819], DOI: 10.1016/J.ESD.2009.07.002**

**Description**

L'invention concerne le domaine des sites de production d'énergie électrique hybrides.

ARRIERE PLAN DE L'INVENTION

On assiste aujourd'hui, dans certains pays où le taux d'ensoleillement est important et où le réseau électrique traditionnel n'est pas accessible sur l'ensemble du territoire, au développement de « *mini-grids* » (que l'on peut traduire par « mini-réseaux électriques »), qui sont des réseaux alimentés électriquement par des stations de production autonomes qui transforment l'énergie solaire en énergie électrique. Les *mini-grids* sont donc isolés du réseau électrique traditionnel.

Un *mini-grid* comprend typiquement quelques dizaines à quelques milliers d'abonnés, qui appartiennent à un quartier, à un village ou à une petite ville.

Une station de production comporte classiquement une pluralité de panneaux solaires photovoltaïques, des batteries pour stocker l'énergie électrique produite à partir de l'énergie solaire, et divers équipements de puissance destinés à convertir et à distribuer l'énergie électrique.

Certaines stations sont dites « hybrides » parce qu'elles intègrent en plus un groupe électrogène. Le groupe électrogène est notamment utilisé la nuit, lorsque la charge des batteries à la tombée du jour est insuffisante pour subvenir aux besoins du *mini-grid* pendant la nuit.

Il est bien sûr intéressant de tenter de réduire autant que possible la quantité de carburant consommé par le groupe électrogène, car celui-ci est très coûteux.

On connaît un certain nombre de méthodes qui visent à optimiser l'usage du groupe électrogène dans les stations hybrides. La plupart de ces méthodes sont incapables d'adapter leur fonctionnement aux aléas météorologiques et de consommation.

Le document US 2013/099720 A1 décrit un système et une méthode pour contrôler une architecture d'alimentation hybride, permettant de réaliser des économies de carburant ou d'énergie.

OBJET DE L'INVENTION

L'invention a pour objet de minimiser la quantité de carburant consommé par le groupe électrogène d'une station de production hybride, tout en maintenant la disponibilité de l'énergie dans le réseau alimenté par la station.

RESUME DE L'INVENTION

En vue de la réalisation de ce but, on propose un procédé d'optimisation de l'utilisation d'un groupe électrogène dans une station de production agencée pour produire et fournir de l'énergie électrique à un réseau et qui comporte, outre le groupe électrogène, un panneau solaire et une batterie, le procédé d'optimisation comprenant les étapes de :

- prédire, en fonction d'un état de charge initial de la batterie à la fin d'une journée, une énergie initiale que la batterie peut fournir au réseau pendant la nuit suivant ladite journée ;
- prédire une consommation attendue et un profil de consommation attendu du réseau pendant la nuit, et estimer, en fonction de l'énergie initiale et de la consommation attendue, la nécessité d'un démarrage du groupe électrogène pendant la nuit ;
- si le démarrage est nécessaire, estimer, en fonction de l'énergie initiale, de la consommation attendue et du profil de consommation attendu, une heure de démarrage du groupe électrogène et une durée de fonctionnement minimale du groupe électrogène, la durée de fonctionnement minimale étant suffisante pour que le groupe électrogène puisse fournir à la fois au réseau une énergie d'appoint suffisante pour satisfaire la consommation attendue du réseau lorsque l'énergie initiale a été entièrement distribuée, et à la batterie une énergie de recharge suffisante pour que la batterie puisse satisfaire la consommation attendue suite à l'arrêt du groupe électrogène ;
- déterminer, en fonction de l'énergie de recharge, un état de charge final de la batterie, qui constitue un critère d'arrêt du groupe électrogène.

Le procédé d'optimisation selon l'invention réalise et utilise donc des prédictions de l'énergie initiale disponible dans la batterie à la fin de la journée, et de la consommation attendue et du profil de consommation attendu, pour déterminer le critère d'arrêt du groupe électrogène pendant la nuit suivant ladite journée.

Le procédé d'optimisation adapte ainsi le critère d'arrêt en fonction des conditions météorologiques, des particularités des batteries et de la consommation des abonnés du réseau, ce qui permet d'optimiser finement l'utilisation du groupe électrogène pour réduire au maximum la consommation de carburant tout en maintenant la disponibilité de l'énergie. La mise en oeuvre du procédé d'optimisation est particulièrement intéressante lorsque la consommation de la charge est une variable non déterministe - comme c'est le cas pour un *mini-grid*.

L'invention sera mieux comprise à la lumière de la description qui suit d'un mode de mise en oeuvre particulier non limitatif de l'invention.

BREVE DESCRIPTION DES DESSINS

Il sera fait référence aux dessins annexés, parmi lesquels :

[Fig. 1] la figure 1 représente une architecture d'électrification rurale dans laquelle est mis en oeuvre le procédé d'optimisation selon l'invention ;
[Fig. 2] la figure 2 représente des phases du procédé de d'optimisation ;
[Fig. 3] la figure 3 représente des étapes d'un processus de prédiction de l'énergie initiale disponible dans les batteries à la fin d'une journée ;
[Fig. 4] la figure 4 représente des étapes d'un processus d'estimation de la nécessité d'un démarrage du groupe électrogène pendant la nuit ;
[Fig. 5] la figure 5 représente des étapes d'un processus de détermination de la condition d'arrêt du groupe électrogène.

DESCRIPTION DETAILLEE DE L'INVENTION

Le procédé d'optimisation selon l'invention est ici mis en oeuvre dans une solution « de bout en bout » d'électrification rurale, qui est utilisée pour alimenter électriquement le ou les abonnés 1 d'un *mini-grid* 2.

L'architecture d'électrification rurale comporte une partie centralisée 3, dite « de supervision et configuration », et destinée à superviser et configurer des sites de production d'énergie associés à des *mini-grids* tels que le *mini-grid* 2, et une partie localisée 4, dite « de production et distribution », qui comprend le site de production d'énergie associé au *mini-grid* 2. La partie centralisée 3 est donc connectée à une pluralité de parties localisées semblables à la partie localisée 4.

La partie centralisée 3 comprend un centre de données client 5 (comprenant des serveurs), un centre d'opération 6 (comprenant des clients *web* pour se connecter au centre de données client 5), et une unité de traitement 7, dans laquelle est mise en oeuvre l'invention.

L'unité de traitement 7 comprend au moins un composant de traitement 8 (ou un système électronique et logiciel) permettant de traiter des données, et adapté à exécuter des instructions d'un programme pour mettre en oeuvre le procédé d'optimisation selon l'invention. L'unité de traitement 7 comprend ainsi par exemple un processeur, un microcontrôleur, ou bien un circuit logique programmable tel qu'un FPGA (pour *Field Programmable Gate Arrays*) ou un ASIC (pour *Application Spécifie Integrated Circuit*). L'unité de traitement 7 comprend aussi au moins une mémoire 9 dans laquelle le programme est stocké. La mémoire 9 est reliée ou intégrée dans le composant de traitement 8.

L'unité de traitement 7 comprend aussi des moyens de communication pour communiquer avec le centre de données client 5.

La partie localisée 4 comporte une station de production 10.

La station de production 10 comprend des panneaux solaires photovoltaïques 12 (que l'on nommera ici « panneaux solaires ») et des onduleurs connectés aux panneaux solaires 12, ainsi que des batteries 14 et des onduleurs connectés aux batteries 14. Il serait bien sûr possible d'avoir un seul panneau solaire 12 et une seule batterie 14.

La station de production 10 comprend aussi un groupe électrogène (diesel) 15, dont le fonctionnement présente un coût élevé.

Les batteries 14 stockent une partie de l'énergie électrique produite par les panneaux solaires, notamment pour alimenter les abonnés du réseau 2 pendant la nuit.

Le groupe électrogène 15 est notamment utilisé la nuit, lorsque la charge des batteries à la tombée du jour est insuffisante pour subvenir aux besoins des abonnés du réseau 2 pendant la nuit.

La partie localisée 4 comprend aussi un contrôleur de production 17, un contrôleur de distribution 18, un concentrateur 19 et des compteurs 20 qui permettent de mesurer l'énergie électrique consommée par les abonnés 1 du *mini-grid* 2. Les compteurs 20 communiquent ici avec le concentrateur 19 via une communication selon la norme RS-485. Le concentrateur 19 communique ici avec le contrôleur de distribution 18 par courants porteurs en ligne (protocole G3-PLC) .

Les architectures de la partie centralisée 3 et de la partie localisée 4 pourraient bien sûr être différentes de celles décrites ici. Par exemple, en ce qui concerne la partie localisée 4, celle-ci pourrait comprendre une pluralité de concentrateurs répartis sur le *mini-grid* 2, avec plusieurs compteurs par concentrateur.

La partie centralisée 3 et la partie localisée 4 communiquent ici entre elles en utilisant un protocole TCP/IP sur un réseau de télécommunication 21 (réseau WAN).

La partie centralisée 3 collecte des données auprès de deux contrôleurs par site (contrôleur de production 17 et contrôleur de distribution 18) et envoie à chaque partie localisée 4 des informations de type configurations techniques, comme les paramètres de déclenchement et d'arrêt du groupe électrogène 15.

La partie localisée 4 envoie à la partie centralisée 3 des données mesurées sur les équipements du site de production et au sein du *mini-grid* 2.

L'unité de traitement 7, dans laquelle est mise en oeuvre l'invention, est donc agencée pour communiquer avec le contrôleur de distribution 18 via le centre de données client 5 et le réseau de télécommunication 21.

Lors de la mise en oeuvre de l'invention, l'unité de traitement 7 reçoit du centre de données client 5 des données de charge et de décharge des batteries 14, et des données de production du groupe électrogène 15 et de consommation des abonnés 1 du *mini-grid* 2. L'unité de traitement 7 transmet au centre de données client 5 des valeurs de paramètres d'utilisation du groupe électrogène 15.

L'unité de traitement 7 utilise ainsi les données collectées par la partie centralisée 3 afin de déterminer chaque jour les paramètres optimaux d'arrêt du groupe électrogène 15, lorsque le groupe électrogène 15 se déclenche la nuit afin de pallier des batteries 14 trop peu chargées pour alimenter le *mini-grid* 2 en électricité.

Optimiser chaque jour le critère d'arrêt (qui, dans les solutions préexistantes, est un critère fixe dans le temps) permet de diminuer significativement la consommation de carburant et de mieux utiliser l'énergie solaire en début de journée, tout en maintenant la continuité de la disponibilité d'énergie électrique dans le *mini-grid* 2. Ces paramètres sont actualisés au minimum chaque jour en fin de journée (une fois le soleil couché) et peuvent être réactualisés après le démarrage du groupe électrogène 15 pour optimiser un éventuel deuxième démarrage plus tard dans la nuit.

L'invention consiste donc à trouver la condition optimale d'arrêt du groupe électrogène 15 lorsque ce dernier se déclenche pour pallier une charge trop faible des batteries 14 qui ne pourront pas subvenir aux besoins du *mini-grid* 2 pendant la nuit. La condition d'arrêt repose ici sur un seuil haut d'état de charge des batteries 14 (état de charge ou SOC, pour State *Of Charge* en anglais). Si ce seuil est trop bas, les batteries 14 risquent à nouveau d'avoir une charge trop faible durant la nuit et le groupe électrogène 15 devra se déclencher à nouveau. Si ce seuil est trop élevé, le groupe électrogène 15 risque de fonctionner au-delà de la nuit alors que les panneaux solaires 12 auraient pu suffire en début de journée. Dans les deux cas, le groupe électrogène 15 est sursollicité et risque de consommer plus de carburant que nécessaire. Voilà pourquoi il est très avantageux de calculer le critère d'arrêt qui permettra de réduire au maximum l'usage du groupe électrogène 15.

Pour cela, l'unité de traitement 7 estime si le groupe électrogène 15 va bien se déclencher, à quelle heure et pendant combien de temps, en fonction de la demande d'énergie des abonnés 1 durant la nuit. En fonction de la demande d'énergie des abonnés 1 durant le reste de la nuit, l'unité de traitement 7 détermine la condition d'arrêt du groupe électrogène 15.

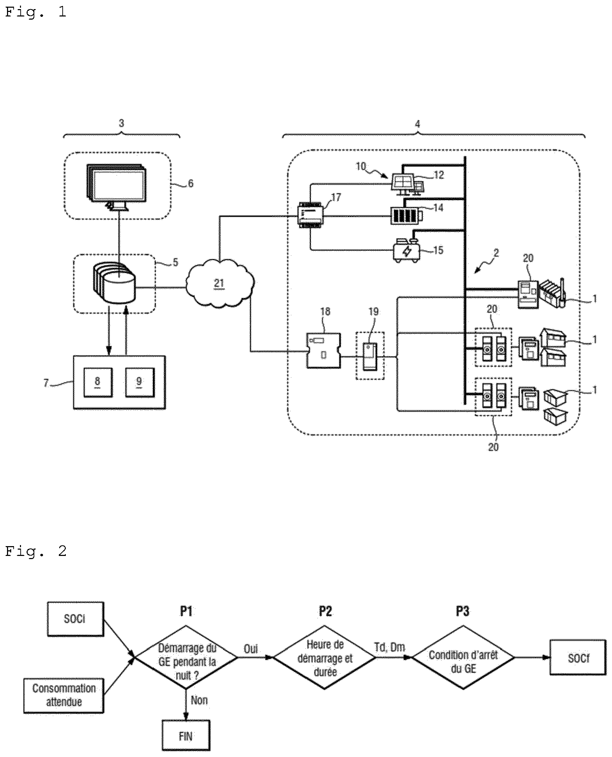

En référence à la figure 2, l'unité de traitement 7 met en œuvre trois phases principales :

- phase P1 : l'unité de traitement 7 évalue la nécessité de démarrer le groupe électrogène 15 pendant la nuit. Cette évaluation utilise l'état de charge initial SOCi des batteries 14 à la fin de la journée, et une estimation de la consommation attendue du *mini-grid* 2 pendant la nuit. Si le démarrage du groupe électrogène 15 n'est pas nécessaire, le procédé s'achève ;
- phase P2 : si le démarrage est nécessaire, l'unité de traitement 7 estime l'heure du démarrage Td du groupe électrogène et sa durée de fonctionnement minimale Dm ;
- phase P3 : l'unité de traitement 7 détermine la valeur de condition d'arrêt du groupe électrogène 15, c'est-à-dire un état de charge final SOCf des batteries 14.

On décrit maintenant plus en détail la mise en oeuvre du procédé d'optimisation selon l'invention.

Le procédé d'optimisation comprend un certain nombre d'étapes, mises en oeuvre à la fin d'une journée.

Ici, par exemple :

- 18h00 correspond à la fin de la journée : c'est le moment où les panneaux solaires 12 ne produisent plus d'énergie et où les batteries 14 assument seules l'alimentation du *mini-grid* 2 ;
- 6h00 correspond au début de la journée : c'est le moment où les panneaux solaires 12 peuvent reprendre le relai.

Bien sûr, les heures de début et de fin de journée dépendent de la localisation géographique du site de production et du *mini-grid* 2, et sont paramétrables.

Ainsi, à 18h00 (à peu près), c'est-à-dire à partir du moment où le soleil se couche, l'unité de traitement 7 détermine un état de charge initial SOCi des batteries 14.

L'unité de traitement 7 prédit alors, en fonction de l'état de charge initial, une énergie initiale Ei que les batteries 14 peuvent fournir au réseau (au *mini-grid* 2) pendant la nuit suivant la journée en question.

La prédiction de l'énergie initiale consiste à calculer une première variation d'état de charge ΔSOC1 entre l'état de charge initial SOCi et un état de charge minimal SOCm défini pour éviter d'endommager les batteries 14, puis à estimer l'énergie fournie par les batteries 14 lorsque l'état de charge des batteries 14 passe de l'état de charge initial à l'état de charge minimal.

L'état de charge des batteries 14 ne doit en effet pas descendre sous un seuil critique d'état de charge $S_{critique}$, au risque d'endommager les batteries 14.

Souvent, les onduleurs reliés aux batteries 14 sont configurés pour arrêter de fournir de l'énergie si le seuil critique $S_{critique}$ est franchi (c'est-à-dire lorsque l'état de charge des batteries 14 passe sous le seuil critique $S_{critique}$), ce qui a pour avantage de protéger les batteries 14, mais c'est au détriment des usagers du *mini-grid* 2 car cela provoque une coupure du courant dans le *mini-grid* 2. La valeur du seuil critique $S_{critique}$ dépend de la technologie des batteries 14.

L'état de charge minimal SOCm utilisé ici est supérieur au seuil critique (ce qui permet de conserver une marge de sécurité) . Ici, par exemple, on a $S_{critique}$ = 40% et SOCm = 50%. Ainsi, lorsque l'état de charge des batteries 14 atteint SOCm, le groupe électrogène 15 démarre, à la fois pour alimenter le *mini-grid* 2 mais aussi pour recharger les batteries 14.

L'estimation de l'énergie initiale Ei ne se déduit pas « trivialement » de la première variation d'état de charge entre l'état de charge initial et l'état de charge minimal.

L'unité de traitement 7 utilise le *machine learning* (apprentissage automatique) pour prédire l'énergie initiale.

L'unité de traitement 7 utilise un premier algorithme d'apprentissage automatique, préalablement entraîné, pour prédire l'énergie initiale à partir de la première variation d'état de charge.

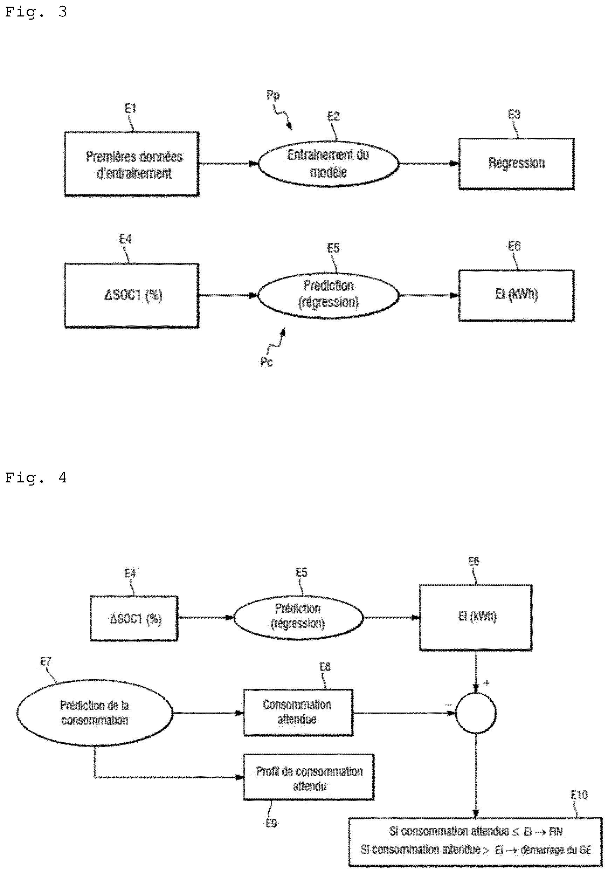

En référence à la figure 3, la prédiction de l'énergie initiale se fait donc en deux phases : une phase préliminaire Pp et une phase courante Pc.

Au cours de la phase préliminaire Pp, réalisée préalablement à la journée en question, l'unité de traitement 7 acquiert des premières données d'entraînement, qui sont des données « historiques » comprenant des valeurs de référence de variations d'état de charge (en % par exemple) et des valeurs de référence d'énergie produite par les batteries 14 (en kWh par exemple) - étape E1.

Les premières données d'entraînement ont donc été acquises (mesurées) dans la station 10, au fil du temps. Les premières données d'entraînement sont transmises à l'unité de traitement 7 par le centre de données client 5 et sont produites principalement par le contrôleur de production 17.

Le premier algorithme d'apprentissage automatique est ici un algorithme de régression (et donc supervisé). La régression est par exemple une régression linéaire (mais un autre type de régression pourrait être utilisée, par exemple polynomiale). L'unité de traitement 7 entraîne le premier algorithme d'apprentissage automatique en utilisant une base de données comprenant les premières données d'entraînement (étape E2).

Le premier algorithme d'apprentissage automatique permet d'obtenir une relation entre les valeurs de la première variation d'état de charge et de l'énergie initiale susceptible d'être produite par les batteries 14 (étape E3).

On note que la phase préliminaire Pp n'est pas nécessairement mise en oeuvre dans l'unité de traitement 7 mais pourrait être réalisée dans une ou plusieurs autres entités (auquel cas l'unité de traitement 7 acquiert le modèle qui a été obtenu lors de la phase préliminaire Pp).

La phase courante Pc est répétée chaque jour, à la tombée du jour, ici à 18h.

L'unité de traitement 7 acquiert l'état de charge initial Ei, et calcule la première variation d'état de charge ΔSOC1 (exprimée ici en %) entre l'état de charge initial SOCi et l'état de charge minimal SOCm (étape E4).

L'unité de traitement 7 utilise alors le modèle de régression (étape E5) pour prédire l'énergie initiale Ei disponible dans les batteries 14 (en kWh) - étape E6.

Pour estimer la nécessité d'un démarrage du groupe électrogène 15 pendant la nuit, il convient aussi de prédire la consommation attendue du *mini-grid* 2 pendant la nuit. L'unité de traitement 7 prédit donc la consommation attendue du *mini-grid* 2 pendant la nuit, mais aussi un profil de consommation attendu. Ici, par profil, on entend un profil d'énergie consommée en fonction du temps. Le profil de consommation attendu comprend ici une valeur d'énergie associée à chaque heure de la nuit.

Il est possible de considérer que la consommation attendue, pendant la nuit qui arrive, est égale à la consommation mesurée la veille au cours de la nuit précédente (et que le profil de consommation attendu est le même que celui de la veille).

Alternativement, l'unité de traitement 7 peut utiliser un deuxième algorithme d'apprentissage automatique, préalablement entraîné, pour prédire la consommation attendue et le profil de consommation attendu.

L'unité de traitement 7 acquiert alors, au cours d'une phase préliminaire semblable à celle précédemment décrite, des deuxièmes données d'entraînement, qui sont des données « historiques » de consommation, ainsi éventuellement que d'autres données disponibles au niveau du système de supervision et configuration.

Les deuxièmes données d'entraînement sont des séries temporelles de consommation (c'est-à-dire des valeurs de consommation associées à des dates et des heures), comprenant des données acquises pendant au moins un an, afin d'obtenir un modèle qui prend en compte la saisonnalité.

Le deuxième algorithme d'apprentissage automatique est à nouveau un algorithme de régression (et donc supervisé), ici de régression linéaire (mais un autre type de régression pourrait être utilisée, par exemple polynomiale). L'unité de traitement 7 entraîne le deuxième algorithme d'apprentissage automatique en utilisant une base de données comprenant les deuxièmes données d'entraînement.

Le deuxième algorithme d'apprentissage automatique permet de prédire, à la fin de la journée, la consommation attendue et le profil de consommation attendu pendant la nuit.

Ainsi, chaque jour J, des informations (date et heure) sont introduites en entrée du modèle obtenu par entraînement du deuxième algorithme d'apprentissage automatique, ce qui permet d'obtenir la consommation attendue et le profil de consommation.

En référence à la figure 4, l'unité de traitement 7 réalise donc la prédiction de la consommation du *mini-grid* (étape E7), et obtient une estimation de la consommation attendue totale du *mini-grid* de 18h00 à 6h00 (étape E8) ainsi qu'une estimation du profil de consommation attendu (étape E9) .

Le profil de consommation attendu du *mini-grid* 2 pendant la nuit comprend ici une estimation de la consommation du *mini-grid* 2 de 18h00 à 19h00, de 19h00 à 20h00 et ainsi de suite jusqu'à 6h00.

L'unité de traitement 7 estime alors, en fonction de l'énergie initiale Ei et de la consommation attendue, la nécessité d'un démarrage du groupe électrogène 15 pendant la nuit (étape E10).

Si la consommation attendue du *mini-grid* 2 est inférieure ou égale à l'énergie initiale disponible dans les batteries 14, le groupe électrogène 15 ne démarrera pas durant la nuit. Le procédé d'optimisation s'achève.

Si la consommation attendue du *mini-grid* 2 est supérieure à l'énergie initiale disponible dans les batteries 14, alors le groupe électrogène 15 démarrera.

On illustre ce qui vient d'être dit par un exemple.

L'état de charge initial des batteries 14 est égal à 90% à 18h00. L'état de charge minimal est égal à 50%. On suppose que la régression de l'énergie disponible dans les batteries 14 donne qu'une décharge de 40% (première variation d'état de charge) correspond à 4,2kWh (énergie initiale). On suppose que la consommation attendue des abonnés du *mini-grid* 2 est égale à 5kWh durant la nuit entre 18h00 et 6h00, dont 4,2kWh jusqu'à 4h00, 0,4kWh de 4h00 à 5h00 et 0,4kWh de 5h00 à 6h00. La demande d'énergie des abonnés est supérieure à celle disponible dans les batteries 14, et il sera donc nécessaire que le groupe électrogène 15 démarre durant la nuit.

On note que la granularité du profil de consommation du *mini-grid* 2 dépend de la granularité des données collectées par le système. On suppose à titre d'exemple que les données sont collectées par pas temporels unitaires successifs ayant chacun une durée de 15 minutes.

Si l'unité de traitement 7 a estimé nécessaire le démarrage du groupe électrogène 15, elle estime, en fonction de l'énergie initiale, de la consommation attendue et du profil de consommation attendu, l'heure de démarrage Td du groupe électrogène 15 et une durée de fonctionnement minimale Dm du groupe électrogène 15.

La durée de fonctionnement minimale est suffisante pour que le groupe électrogène 15 puisse fournir à la fois au *mini-grid* 2 une énergie d'appoint suffisante pour satisfaire la consommation attendue du *mini-grid* 2 lorsque l'énergie initiale est entièrement consommée, et aux batteries 14 une énergie de recharge suffisante pour que les batteries 14 puissent satisfaire la consommation attendue suite à l'arrêt du groupe électrogène 15 (à l'issue de la durée de fonctionnement minimale). La durée de fonctionnement minimale permet donc aux batteries 14 de se recharger suffisamment pour prendre le relai de la fourniture d'énergie à la place du groupe électrogène 15, jusqu'à ce que les panneaux solaires 12 puissent à leur tour prendre le relai en début de journée.

L'unité de traitement 7 compare le profil de consommation attendu et l'énergie initiale, et estime l'heure de démarrage avec une granularité correspondant au pas temporel unitaire (15mn).

L'heure de démarrage correspond donc à l'heure multiple de 15mn juste avant que l'état de charge n'atteigne l'état de charge minimal SOCm.

L'heure de démarrage Td est donc définie de sorte que l'heure de démarrage Td précède un moment TS où l'état de charge courant des batteries 14 va atteindre l'état de charge minimal, et de sorte que :

$$\text{TS} - \text{Td} \leq \Delta T1,$$

où $\Delta T1$ est un premier pas temporel unitaire (de durée égale au pas temporel unitaire qui vient d'être cité).

L'unité de traitement 7 détermine ensuite la durée de fonctionnement minimale Dm du groupe électrogène 15. La durée de fonctionnement minimale Dm permet de vérifier les conditions suivantes :

- la consommation attendue du *mini-grid* 2 pendant la nuit (**Load$_E$**) correspond à l'énergie fournie par les batteries 14 au *mini-grid* 2 pendant la nuit (**Batt$_{E,OUT,nuit}$**) et à l'énergie d'appoint (**Load$_{E,DC}$**) fournie par le groupe électrogène 15 au *mini-grid* 2 pendant la durée de fonctionnement du groupe électrogène 15 ;
- pendant chaque deuxième pas temporel unitaire de durée $\Delta T2$ (15 minutes ; le deuxième pas temporel unitaire est ici égal au premier pas temporel unitaire - mais cela n'est pas nécessaire) durant lequel le groupe électrogène 15 est actif (entre l'allumage et jusqu'à atteindre la durée de fonctionnement minimale Dm), le groupe électrogène 15 produit une puissance électrique moyenne $DG_P$; cette puissance est répartie en une puissance $Load_{P,DG}$, qui est une puissance moyenne fournie par le groupe électrogène 15 au *mini-grid* 2 pendant le deuxième pas temporel unitaire, et en une puissance $Batt_{P,IN}$, qui est une puissance fournie par le groupe électrogène 15 aux batteries 14 pour leur recharge pendant le deuxième pas temporel unitaire ;

- les batteries 14 ont un rendement $\alpha$, l'énergie de recharge $Batt_{E,IN}$ fournie aux batteries 14 pour les recharger pendant la durée de fonctionnement du générateur 15 est donc supérieure à l'énergie $Batt_{E,OUT}$ pouvant être fournie au *mini-grid* 2 par les batteries 14 alors qu'elles ont été chargées avec l'énergie de recharge $Batt_{E,IN}$ (au facteur de rendement près).

On a :

$$Load_E = Load_{E,DG} + Batt_{E,OUT,nuit} \text{ ;}$$

$$DG_P = Load_{P,DG} + Batt_{P,IN} \text{ ;}$$

$$Batt_{E,OUT} = \alpha\, Batt_{E,IN} \text{ .}$$

L'unité de traitement 7 détermine donc itérativement la première valeur d'un nombre N qui permet de satisfaire les conditions suivantes :

$$Load_E = Load_{E,DG} + Batt_{E,OUT,nuit} \; (\text{équation } 1) \text{ ;}$$

$$\sum_{k=1}^{N} DG_P = \sum_{k=1}^{N} Load_{P,DG} + \sum_{k=1}^{N} Batt_{P,IN} \; (\text{équation } 2) \text{ ;}$$

$$Batt_{E,OUT} = \alpha Batt_{E,IN} \; (\text{équation} 3)$$

où $Load_E$ est la consommation attendue, $Load_{E,DG}$ est l'énergie d'appoint, $Batt_{E,OUT,nuit}$ est une énergie fournie par les batteries 14 au *mini-grid* 2 pendant la nuit, $DG_P$ est une puissance électrique moyenne produite par le groupe électrogène 15 pendant le deuxième pas temporel unitaire de durée $\Delta T2$, $Load_{P,DG}$ est une puissance moyenne fournie par le groupe électrogène 15 au *mini-grid* 2 pendant le deuxième pas temporel unitaire, $Batt_{P,IN}$ est une puissance fournie par le groupe électrogène 15 aux batteries 14 pour leur recharge pendant le deuxième pas temporel unitaire, $Batt_{E,IN}$ est l'énergie de recharge, $Batt_{E,OUT}$ est une énergie pouvant être fournie au *mini-grid* 2 par les batteries 14 alors qu'elles ont été chargées avec l'énergie de recharge $Batt_{E,IN}$, et $\alpha$ est un rendement des batteries 14, la durée de fonctionnement minimale Dm étant égale à $N.\Delta T2$.

Dans l'exemple qui vient d'être évoqué, le rendement des batteries 14 est connu et est égal à 0,8.

L'unité de traitement 7 a estimé à partir du profil de consommation attendu et de l'énergie initiale que le groupe électrogène 15 démarrera à 4h00 (heure de démarrage Td). Lorsque le groupe électrogène 15 fonctionne, il fournit une puissance moyenne connue de 2kW, soit une énergie de 2kWh par heure.

Si le groupe électrogène 15 fonctionne durant 30 minutes à partir de 4h, alors il produit 1kWh dont 0,2kWh qui alimentent le *mini-grid* 2 et 0,8kWh pour recharger les batteries 14 (équation 2). Le rendement des batteries 14 étant de 0,8, si une énergie de 0, 8kWh recharge les batteries 14, alors une énergie de 0,64kWh est effectivement disponible en sortie des batteries 14 pour alimenter le *mini-grid* 2 (équation 3). Il reste à vérifier qu'avec ces 30 minutes de fonctionnement du groupe électrogène 15, la demande d'énergie du *mini-grid* 2 durant la nuit est complètement couverte (équation 1). De 18h à 4h, 4,2kWh provenant des batteries 14 sont consommés ; durant le fonctionnement du groupe électrogène 15 de 4h à 4h30, 0,2kWh sont consommés. Entre 4h30 et 6h, la demande du *mini-grid* 2 est de 0,6kWh, cette demande peut être couverte par l'énergie présente dans les batteries 14 suite au fonctionnement du groupe électrogène 15.

Lorsque la durée de fonctionnement minimale Dm a été déterminée, l'unité de traitement 7 connaît l'énergie de recharge $Batt_{E,IN}$ fournie aux batteries 14 par le groupe électrogène 15 pour que la demande du *mini-grid* 2 soit satisfaite jusqu'au lever du jour.

L'unité de traitement 7 définit alors un critère d'arrêt du groupe électrogène 15, qui est basé sur l'état de charge des batteries 14. L'état de charge est en effet une valeur mesurable et déjà utilisée comme critère de démarrage du groupe électrogène 15 et d'arrêt de la station de production.

L'unité de traitement 7 détermine donc, en fonction de l'énergie de recharge, un état de charge final SOCf des batteries 14, qui constitue le critère d'arrêt du groupe électrogène 15.

En utilisant un historique de données sur la charge des batteries 14 (et notamment l'historique des valeurs d'état de charge en charge et en décharge des batteries 14), l'unité de traitement 7 obtient une relation entre l'énergie de recharge fournie aux batteries 14 par le groupe électrogène 15, et une deuxième variation de l'état de charge, correspondant à l'augmentation d'état de charge des batteries 14 du fait de la recharge.

Le groupe électrogène 15 se met à fonctionner lorsque l'état de charge des batteries 14 atteint l'état de charge minimal SOCm. L'unité de traitement 7 détermine la deuxième variation d'état de charge $\Delta SOC2$ correspondant à l'énergie qui a rechargé les batteries 14 puis, en ajoutant l'état de charge minimal à ladite deuxième variation d'état de charge $\Delta SOC2$, l'unité de traitement 7 en déduit l'état de charge final SOCf, qui est la valeur d'état de charge constituant la condition d'arrêt du fonctionnement du groupe électrogène 15.

L'unité de traitement 7 peut utiliser à nouveau le *machine learning* pour prédire l'état de charge final.

L'unité de traitement 7 utilise un troisième algorithme d'apprentissage automatique, préalablement entraîné au cours d'une phase préliminaire telle que décrite plus haut, pour prédire à partir de l'énergie de recharge la deuxième variation d'état de charge entre l'état de charge final et l'état de charge minimal.

L'unité de traitement 7 acquiert donc des troisièmes données d'entraînement, qui sont des données « historiques » comprenant des valeurs de référence de variations d'état de charge (en %) et des valeurs de référence d'énergie produite par les batteries 14.

Le troisième algorithme d'apprentissage automatique est un algorithme de régression (et donc supervisé), ici de régression linéaire (mais un autre type de régression pourrait être utilisée, par exemple polynomiale). L'unité de traitement 7 entraîne le troisième algorithme d'apprentissage automatique en utilisant une base de données comprenant les troisièmes données d'entraînement.

Le troisième algorithme d'apprentissage automatique permet d'obtenir une relation entre l'énergie de recharge $Batt_{E,IN}$ et la deuxième variation d'état de charge $\Delta SOC2$.

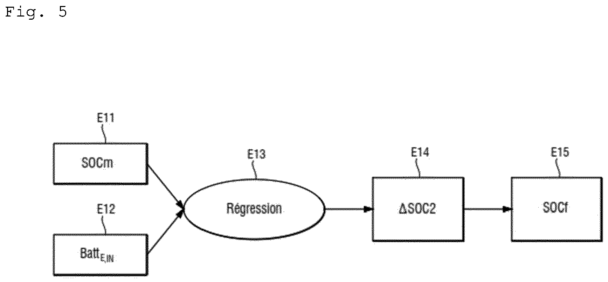

Ainsi, en référence à la figure 5, l'unité de traitement acquiert l'état de charge minimal SOCm (étape E11) et l'énergie de recharge $Batt_{E,IN}$ (étape E12), et utilise le modèle de régression (étape E13) pour prédire la deuxième variation d'état de charge $\Delta SOC2$ (étape E14), puis l'état de charge final SOCf (étape E15).

Lorsque l'état de charge final a été déterminé, l'unité de traitement 7 met à jour dans le système cette condition pour la nuit.

On a donc vu, en reprenant l'exemple précédemment évoqué, que l'énergie de recharge $Batt_{E,IN}$ fournie aux batteries 14 durant le fonctionnement du groupe électrogène 15 doit être de 0,8kWh afin de répondre à la demande d'énergie du *mini-grid* 2 durant le reste de la nuit. Le groupe électrogène 15 se met en fonctionnement à partir d'un état de charge des batteries 14 égal à 50% (état de charge minimal). Les batteries 14 se rechargent avec 0,8kWh. Grâce à la régression linéaire, l'unité de traitement 7 détermine qu'une recharge de 0,8kWh correspond à une augmentation de 7% de l'état de charge ($\Delta SOC2$). La condition d'arrêt du fonctionnement du groupe électrogène 15 après avoir rechargé les batteries 14 est donc de 57% (état de charge final).

La solution décrite permet donc de mettre à jour la valeur d'état de charge final une fois par jour à la tombée de la nuit (afin de se baser sur la valeur réelle de l'état de charge initial à 18h00).

Mais le procédé d'optimisation peut être aussi être mis en oeuvre à nouveau pendant la nuit, une ou plusieurs fois, afin de réactualiser la valeur de l'état de charge final - et donc du critère d'arrêt.

A chaque nouvelle mise en oeuvre du procédé d'optimisation, pendant la nuit, les différentes étapes décrites plus haut sont répétées, en utilisant comme état de charge initial l'état de charge des batteries 14 au moment de ladite mise en oeuvre du procédé d'optimisation. La consommation attendue et le profil de consommation attendu sont a priori inchangés - mais peuvent éventuellement eux aussi être mis à jour en fonction de mesures réalisées pendant la nuit.

On note que le procédé d'optimisation selon l'invention pourrait s'appliquer à tout système constitué de sites de production d'énergie supervisés par un serveur central. Mais le procédé d'optimisation est particulièrement intéressant dans le cas où les sites de production d'énergie alimentent une charge non déterministe (telle qu'un *mini-grid* 2, pour lequel la consommation des usagers n'est pas déterministe).

On note aussi que l'architecture de la figure 1 présente plusieurs avantages pour la mise en oeuvre de l'invention.

Le choix d'intégrer l'invention au système centralisé et non directement au contrôleur de production 17 permet d'avoir accès directement à l'historique des données, ce qui est nécessaire pour que les algorithmes de *data processing* et de *machine learning* soient efficaces.

De plus, cela rend l'invention compatible avec un contrôleur de production 17 simple et peu coûteux. Un automate simple de contrôle-commande suffit, il n'y a pas besoin de calculateur coûteux car il n'y a pas besoin d'effectuer des traitements complexes ni d'embarquer des algorithmes de prédiction en local.

Le fait d'actualiser les paramètres d'utilisation du groupe électrogène 15 une fois par jour et non en continu rend l'invention compatible avec un réseau de communication de mauvaise qualité (indisponibilité quotidienne non négligeable), ce qui est souvent le cas dans les applications d'électrification rurale ou pour les stations télécom.

Bien entendu, l'invention n'est pas limitée au mode de réalisation décrit mais englobe toute variante entrant dans le champ de l'invention telle que définie par les revendications.

Les algorithmes d'apprentissage automatique utilisés ne sont pas obligatoirement des régressions linéaires ; d'autres types d'algorithmes peuvent être utilisés, par exemple des réseaux de neurones ou des machines à vecteur de support.

**Revendications**

1. Procédé d'optimisation de l'utilisation d'un groupe électrogène (15) dans une station de production (10) agencée pour produire et fournir de l'énergie électrique à un réseau (2) et qui comporte, outre le groupe électrogène, un panneau solaire (12) et une batterie (14), la batterie stockant une partie d'une énergie électrique produite par le panneau solaire pour alimenter des abonnés du réseau pendant la nuit,

   le procédé d'optimisation étant **caractérisé en ce qu'**il comprend les étapes de :

   - prédire, en fonction d'un état de charge initial (SOCi) de la batterie à la fin d'une journée, une énergie initiale (Ei) que la batterie peut fournir au réseau pendant la nuit suivant ladite journée ;
   - prédire une consommation attendue et un profil de consommation attendu du réseau pendant la nuit, et estimer, en fonction de l'énergie initiale et de la consommation attendue, la nécessité d'un démarrage du groupe électrogène (15) pendant la nuit ;
   - si le démarrage est nécessaire, estimer, en fonction de l'énergie initiale, de la consommation attendue et du profil de consommation attendu, une heure de démarrage (Td) du groupe électrogène et une durée de fonctionnement minimale (Dm) du groupe électrogène, la durée de fonctionnement minimale étant suffisante pour que le groupe électrogène puisse fournir à la fois au réseau une énergie d'appoint suffisante pour satisfaire la consommation attendue du réseau lorsque l'énergie initiale a été entièrement distribuée, et à la batterie une énergie de recharge suffisante pour que la batterie puisse satisfaire la consommation attendue suite à l'arrêt du groupe électrogène ;
   - déterminer, en fonction de l'énergie de recharge, un état de charge final (SOCf) de la batterie, qui constitue un critère d'arrêt du groupe électrogène.

2. Procédé d'optimisation selon la revendication 1, dans lequel la prédiction de l'énergie initiale comprend les étapes de calculer une première variation d'état de charge (ΔSOC1) entre l'état de charge initial (SOCi) et un état de charge minimal (SOCm) défini pour éviter d'endommager la batterie, et d'utiliser un premier algorithme d'apprentissage automatique, préalablement entraîné, pour prédire l'énergie initiale à partir de la première variation d'état de charge.

3. Procédé d'optimisation selon la revendication 2, dans lequel le premier algorithme d'apprentissage automatique est un algorithme de régression.

4. Procédé d'optimisation selon l'une des revendications précédentes, dans lequel la prédiction de la consommation attendue et du profil de consommation attendu utilise un deuxième algorithme d'apprentissage automatique préalablement entraîné avec une base de données comprenant des séries temporelles de consommation, de sorte que chaque jour, des informations de date et d'heure sont introduites en entrée d'un modèle obtenu par entraînement du deuxième algorithme d'apprentissage automatique, ce qui permet d'obtenir la consommation attendue et le profil de consommation.

5. Procédé d'optimisation selon l'une des revendications 1 à 3, dans lequel la prédiction de la consommation attendue et du profil de consommation attendu consiste à utiliser une consommation et un profil de consommation mesurés au cours de la nuit précédente.

6. Procédé d'optimisation selon l'une des revendications précédentes, dans lequel l'heure de démarrage du groupe électrogène (15) est définie de sorte que ladite heure de démarrage Td précède un moment TS où un état de charge courant de la batterie atteint l'état de charge minimal, et de sorte que :

$$TS - Td \leq \Delta T1,$$

où $\Delta T1$ est un premier pas temporel unitaire.

**7.** Procédé d'optimisation selon l'une des revendications précédentes, dans lequel l'estimation de la durée de fonctionnement minimale (Dm) comprend l'étape de déterminer itérativement une première valeur d'un nombre N qui permet de satisfaire les conditions suivantes :

$$Load_E = Load_{E,DG} + Batt_{E,OUT,nuit} \, ;$$

;

$$\sum_{k=1}^{N} DG_P = \sum_{k=1}^{N} Load_{P,DG} + \sum_{k=1}^{N} Batt_{P,IN} \, ;$$

;

$$Batt_{E,OUT} = \alpha \, Batt_{E,IN},$$

où $Load_E$ est la consommation attendue, $Load_{E,DG}$ est l'énergie d'appoint, $Batt_{E,OUT,nuit}$ est une énergie fournie par la batterie (14) au réseau (2) pendant la nuit, $DG_P$ est une puissance électrique moyenne produite par le groupe électrogène (15) pendant un deuxième pas temporel unitaire de durée $\Delta T2$, $Load_{P,DG}$ est une puissance moyenne fournie par le groupe électrogène au réseau pendant le deuxième pas temporel unitaire, $Batt_{P,IN}$ est une puissance fournie par le groupe électrogène à la batterie pour sa recharge pendant le deuxième pas temporel unitaire, $Batt_{E,IN}$ est l'énergie de recharge, $Batt_{E,OUT}$ est une énergie pouvant être fournie au réseau par la batterie alors qu'elle a été chargée avec l'énergie de recharge $Batt_{E,IN}$, et $\alpha$ est un rendement de la batterie, la durée de fonctionnement minimale étant égale à $N.\Delta T2$.

**8.** Procédé d'optimisation selon l'une des revendications précédentes, dans lequel la détermination de l'état de charge final (SOCf) comprend les étapes d'utiliser un troisième algorithme d'apprentissage automatique, préalablement entraîné, pour prédire à partir de l'énergie de recharge une deuxième variation d'état de charge (ΔSOC2) entre l'état de charge final et l'état de charge minimal.

**9.** Procédé d'optimisation selon l'une des revendications précédentes, les étapes du procédé d'optimisation étant répétées au moins une fois au cours de ladite nuit pour réactualiser l'état de charge final (SOCf).

**10.** Unité de traitement (7) dans laquelle est mis en œuvre le procédé d'optimisation selon l'une des revendications précédentes.

**11.** Programme d'ordinateur comprenant des instructions qui conduisent l'unité de traitement (7) selon la revendication 10 à exécuter les étapes du procédé d'optimisation selon l'une des revendications 1 à 9.

**12.** Support d'enregistrement lisible par ordinateur, sur lequel est enregistré le programme d'ordinateur selon la revendication 11.

**Patentansprüche**

**1.** Verfahren zur Nutzungsoptimierung eines Stromaggregats (15) in einer Erzeugerstation (10), die dazu angeordnet ist, elektrische Energie zu erzeugen und an ein Netz (2) zu liefert, und die zusätzlich zu dem Stromaggregat ein Solarpaneel (12) und eine Batterie (14) umfasst, wobei die Batterie einen Teil einer von dem Solarpaneel erzeugten elektrischen Energie speichert, um die Versorgung von Netzteilnehmern während der Nacht zu gewährleisten, wobei das Optimierungsverfahren **dadurch gekennzeichnet ist, dass** es die Schritte umfasst, dass:

- in Abhängigkeit von einem Ausgangs-Ladezustand (SOCi) der Batterie am Ende eines Tages, eine Ausgangsenergie (Ei) vorhergesagt wird, welche die Batterie während der auf diesen Tag folgenden Nacht an das Netz liefern kann;

- ein erwarteter Verbrauch und ein erwartetes Verbrauchsprofil des Netzes während der Nacht vorhergesagt wird und, in Abhängigkeit von der Ausgangsenergie und dem erwarteten Verbrauch, die Notwendigkeit eines Starts des Stromaggregats (15) während der Nacht abgeschätzt wird;

- wenn der Start erforderlich ist, in Abhängigkeit von der Ausgangsenergie, dem erwarteten Verbrauch und dem erwarteten Verbrauchsprofil eine Startzeit (Td) des Stromaggregats und eine Mindestbetriebsdauer (Dm) des Stromaggregats abgeschätzt wird, wobei die Mindestbetriebsdauer dafür ausreicht, dass das Stromaggregat sowohl das Netz mit ausreichender Zusatzenergie versorgen kann, um nach vollständiger Verteilung der Ausgangsenergie den erwarteten Verbrauch des Netzes zu decken, als auch die Batterie mit ausreichender Nachladeenergie versorgen kann, damit die Batterie den erwarteten Verbrauch nach dem Abschalten des Stromaggregats decken kann;

- in Abhängigkeit von der Nachladeenergie, ein Soll-Ladezustand (SOCf) der Batterie ermittelt wird, der ein Kriterium für das Abschalten des Stromaggregats darstellt.

2. Optimierungsverfahren nach Anspruch 1, wobei das Vorhersagen der Ausgangsenergie die Schritte umfasst, dass eine erste Ladezustandsänderung ($\Delta$SOC1) zwischen dem Ausgangs-Ladezustand (SOCi) und einem Minimal-Ladezustand (SOCm) berechnet wird, der dafür definiert ist, eine Beschädigung der Batterie zu vermeiden, und dass ein erster maschineller Lernalgorithmus verwendet wird, der zuvor dazu trainiert wurde, aus der ersten Ladezustandsänderung die Ausgangsenergie vorherzusagen.

3. Optimierungsverfahren nach Anspruch 2, wobei es sich bei dem ersten maschinellen Lernalgorithmus um einen Regressionsalgorithmus handelt.

4. Optimierungsverfahren nach einem der vorhergehenden Ansprüche, wobei bei der Vorhersage des erwarteten Verbrauchs und des erwarteten Verbrauchsprofils ein zweiter, maschineller Lernalgorithmus verwendet wird, der zuvor mit einer Verbrauchszeitreihen umfassenden Datenbank trainiert wurde, sodass täglich Datums- und Uhrzeit-Informationen als Eingabe in ein durch Training des zweiten, maschinellen Lernalgorithmus erstelltes Modell verwendet werden, wodurch sich der erwartete Verbrauch und das Verbrauchsprofil gewinnen lassen.

5. Optimierungsverfahren nach einem der Ansprüche 1 bis 3, wobei die Vorhersage des erwarteten Verbrauchs und des erwarteten Verbrauchsprofils darin besteht, einen Verbrauch und ein Verbrauchsprofil zu verwenden, die während der vorangegangenen Nacht gemessen wurden.

6. Optimierungsverfahren nach einem der vorhergehenden Ansprüche, wobei die Startzeit des Stromaggregats (15) derart definiert ist, dass die Startzeit Td einem Zeitpunkt TS vorausgeht, an dem ein aktueller Ladezustand der Batterie den Minimal-Ladezustand erreicht, und dass:

$$TS - Td \leq \Lambda T1,$$

wobei $\Lambda T1$ ein erster einheitlicher Zeitschritt ist.

7. Optimierungsverfahren nach einem der vorhergehenden Ansprüche, wobei das Schätzen der Mindestbetriebsdauer (Dm) den Schritt umfasst, dass in iterativer Weise ein erster Wert einer Zahl N bestimmt wird, mit dem die folgenden Bedingungen erfüllt sind :

$$Load_E = Load_{E,DG} + Batt_{E,OUT,nuit} :$$

$$\sum_{k=1}^{N} DG_P = \sum_{k=1}^{N} Load_{P,DG} + \sum_{k=1}^{N} Batt_{P,IN}$$

$$Batt_{E,OUT} = \alpha Batt_{E,IN,}$$

wobei $Load_E$ der erwartete Verbrauch ist, $Load_{E,DG}$ die Zusatzenergie ist, $Batt_{E,OUT nuit}$ eine von der Batterie (14) während der Nacht an das Netz (2) gelieferte Energie ist, $DG_P$ eine von dem Stromaggregat (15) während eines zweiten, einheitlichen Zeitschritts mit der Dauer **AT2** erzeugte, elektrische Durchschnittsleistung ist, $Load_{P,DG}$ eine von dem Stromaggregat während des zweiten, einheitlichen Zeitschritts an das Netz gelieferte Durchschnittsleistung ist, $Batt_{P,IN}$ eine von dem Stromaggregat an die Batterie gelieferte Leistung zu deren Nachladung während des zweiten, einheitlichen Zeitschritts ist, $Batt_{E,IN}$ die Nachladeenergie ist, $Batt_{E,OUT}$ eine Energie ist, die von der Batterie an das Netz geliefert werden kann, nachdem diese mit der Nachladeenergie geladen worden ist $Batt_{E,IN}$, und $\alpha$ eine Batterieleistung ist, wobei die Mindestbetriebsdauer gleich $N.\Lambda T2$ ist.

8. Optimierungsverfahren nach einem der vorhergehenden Ansprüche, wobei die Bestimmung des Soll-Ladezustand (SOCf) die Schritte umfasst, dass ein dritter maschineller Lernalgorithmus verwendet wird, der zuvor dazu trainiert wurde, aus der Nachladeenergie eine zweite Ladezustandsänderung ($\Lambda$SOC2) zwischen dem Soll-Ladezustand und dem Minimal-Ladezustand vorherzusagen.

9. Optimierungsverfahren nach einem der vorhergehenden Ansprüche, wobei die Schritte des Optimierungsverfahrens zumindest einmal während der Nacht wiederholt werden, um den Soll-Ladezustand (SOCf) neu zu aktualisieren.

10. Verarbeitungseinheit (7), in welcher das Optimierungsverfahren nach einem der vorhergehenden Ansprüche ausgeführt wird.

11. Computerprogramm, das Befehle umfasst, welche die Verarbeitungseinheit (7) nach Anspruch 10 dazu veranlassen, die Schritte des Optimierungsverfahrens nach einem der Ansprüche 1 bis 9 auszuführen.

12. Computerlesbares Speichermedium, auf welchem das Computerprogramm nach Anspruch 11 abgespeichert ist.

## Claims

1. An optimization method for optimizing the use of a generator unit (15) in a power station (10) that is arranged to produce electrical energy and to deliver it to a network (2) and that includes, in addition to the generator unit, both a solar panel (12) and a battery (14), the battery storing a fraction of an electrical energy produced by the solar panel in order to power the subscribers of the network during the night, the optimization method being **characterized in that** it comprises the steps of:

   · predicting, as a function of an initial state of charge (SOCi) of the battery at the end of a day, an initial amount of energy (Ei) that the battery will be able to deliver to the network during the night following the day;
   · predicting both an expected consumption and an expected consumption profile that are to be expected for the network during the night and estimating, as a function of the initial amount of energy and of the expected consumption, whether it will be necessary to start the generator unit (15) during the night;
   · if starting is going to be necessary, estimating, as a function of the initial amount of energy, of the expected consumption, and of the expected consumption profile, a starting time (Td) for starting the generator unit and a minimum length of operating time (Dm) for operating the generator unit, the minimum length of operating time being sufficient for the generator unit to deliver both a sufficient top-up energy to the network to satisfy the expected consumption of the network once the entire initial amount of energy has been distributed and also a sufficient recharging energy to the battery to enable it to satisfy the expected consumption after the generator unit has been stopped;
   · determining a final state of charge (SOCf) of the battery as a function of the recharging energy, which final state of charge constitutes a stop criterion for stopping the generator unit.

2. An optimization method according to claim 1, wherein predicting the initial amount of energy comprises steps of calculating a first variation in the state of charge ($\Delta$SOC1) between the initial state of charge (SOCi) and a minimum state of charge (SOCm) that is defined so as to avoid damaging the battery, and using a previously-trained first machine learning algorithm to predict the initial amount of energy from the first variation in the state of charge.

3. An optimization method according to claim 2, wherein the first machine learning algorithm is a regression algorithm.

4. An optimization method according to any preceding claim, wherein predicting the expected consumption and the expected consumption profile makes use of a second machine learning algorithm that has previously been trained with a database comprising consumption time series, such that for each day, date and time information is input to a model that has been obtained by training the second machine learning algorithm, thereby obtaining the expected consumption and the consumption profile.

5. An optimization method according to any one of claims 1 to 3, wherein predicting the expected consumption and the expected consumption profile consists in making use of the consumption and the consumption profile as measured during the preceding night.

6. An optimization method according to any preceding claim, wherein the starting time for the generator unit (15) is defined in such a manner that said starting time Td precedes a time TS when the current state of charge of the battery reaches the minimum state of charge, and in such a manner that:

$$TS - Td \leq \Delta T1;$$

where $\Delta T1$ is a first unit time interval.

7. An optimization method according to any preceding claim, wherein estimating the minimum length of operating time (Dm) includes a step of iteratively determining a first value for a number N that enables the following conditions to be satisfied:

$$Load_E = Load_{E,DG} + Batt_{E,OUT,night};$$

$$\sum_{k=1}^{N} DG_P = \sum_{k=1}^{N} Load_{P,DG} + \sum_{k=1}^{N} Batt_{P,IN}$$

$$Batt_{E,OUT} = \alpha Batt_{E,IN},$$

where $Load_E$ is the expected consumption, $Load_{E,DG}$ is the top-up energy, $Batt_{E,OUT,night}$ is the energy delivered by the battery (14) to the network (2) during the night, $DG_P$ is the mean electrical power produced by the generator unit (15) during a second unit time interval of duration $\Delta T2$, $Load_{P,DG}$ is the mean power delivered by the generator unit to the network during the second unit time interval, $Batt_{P,IN}$ is the power delivered by the generator unit to the battery in order to recharge it during the second unit time interval, $Batt_{E,IN}$ is the recharging energy, $Batt_{E,OUT}$ is the energy that can be delivered to the network by the battery once it has been charged with the recharging energy $Batt_{E,IN}$, and $\alpha$ is the efficiency of the battery, with the minimum length of operating time being equal to $N.\Delta T2$.

8. An optimization method according to any preceding claim, wherein determining the final state of charge (SOCf) comprises step of using a previously-trained third machine learning algorithm for using the recharging energy to predict a second variation in the state of charge ($\Delta$SOC2) between the final state of charge and the minimum state of charge.

9. An optimization method according to any preceding claim, the steps of the optimization method being repeated at least once during said night in order to update the final state of charge (SOCf).

10. A processor unit (7) in which the optimization method according to any preceding claim is performed.

11. A computer program including instructions that cause the processor unit (7) according to claim 10 to execute the steps of the optimization method according to any one of claims 1 to 9.

12. A computer-readable storage medium storing the computer program according to claim 11.

Fig. 1

Fig. 2

Fig. 3

Fig. 4

Fig. 5

**RÉFÉRENCES CITÉES DANS LA DESCRIPTION**

**Documents brevets cités dans la description**

- US 2013099720 A1